# EUROPÄISCHE PATENTANMELDUNG

(11) **EP 3 474 464 A1**
(43) Veröffentlichungstag der Anmeldung: **24.04.2019**
(21) Anmeldenummer: 18201083.5
(22) Anmeldetag: 17.10.2018
(51) Int. Cl.: H04B 10/114, G07C 9/00

(54) **VERFAHREN, SCHALTUNGSANORDNUNG UND SET ZUM OPTISCHEN ÜBERTRAGEN VON DATEN MIT EINER ZEITWEISE EMPFANGSBEREITEN TRANSPONDERVORRICHTUNG**

(30) Priorität: 20.10.2017 DE 102017218769
(71) Anmelder: Reime, Gerd, 77815 Bühl (DE)
(72) Erfinder: Reime, Gerd, 77815 Bühl (DE)
(74) Vertreter: RPK Patentanwälte Reinhardt, Pohlmann und Kaufmann Partnerschaft mbB

(57) **Zusammenfassung**

Die Erfindung betrifft ein Verfahren zum Übertragen von Daten zwischen einer Transpondervorrichtung (7) und einer Lesevorrichtung (9). Um eine besonders stromsparende Alternative zum Übertragen von Daten bereitzustellen, werden ein periodisches wechselweises Empfangsbereithalten und Nichtempfangsbereithalten der Transpondervorrichtung (7) und ein periodisches Aussenden eines Wecksignals (11) mittels der Lesevorrichtung (9) sowie ein Starten des Übertragens der Daten (5) in Abhängigkeit des Wecksignals (11) vorgeschlagen.

## Beschreibung

Die Erfindung betrifft ein Verfahren sowie eine Schaltungsanordnung zum optischen Übertragen von Daten zwischen einer Transpondervorrichtung und einer Lesevorrichtung und ein vorrichtungs- und/oder verfahrensgemäßes Set mit einer Transpondervorrichtung und Lesevorrichtung.

Im Grundsatz ist das Übertragen von Daten zwischen Sendeempfangsvorrichtungen bekannt. Allgemein üblich ist beispielsweise das Übertragen von Daten in Kommunikationsnetzwerken für Zwecke der Telekommunikation oder Computeranwendungen. Aus der US 5 677 909 A sind drahtlose Kommunikationsnetzwerke bekannt, bei denen zum Beispiel eine Basisstation über zeitlich gemultiplexte Kommunikationskanäle, optische Infrarotschnittstellen und ein entsprechendes Protokoll mit einer Vielzahl von Remotestationen kommuniziert. Die Remotestationen können in einen stromsparenden Ruhezustand versetzt werden, wobei insbesondere auch die entsprechende optische Infrarotschnittstelle abgeschaltet wird. Während einer laufenden Kommunikation können ein Sender und ein Empfänger der Basisstation zeitweise aktiviert und deaktiviert werden.

Die EP 2 451 123 B1 betrifft eine Kontrolleinheit für ein passives optisches Netzwerk, bei dem über eine gemeinsame optische Faser eine Kommunikation zwischen einer Basisstation und einer Vielzahl an nutzerseitigen Endgeräten stattfindet. In einem Energiesparmodus kann ein Sender eines entsprechenden Endgeräts abgeschaltet und ein Empfänger des Endgeräts eingeschaltet werden.

Eine andere Anwendung, bei der Daten zwischen Sendeempfangsvorrichtungen übertragen werden, ist beispielsweise eine berührungslose Identifikation von Objekten und/oder Personen. Dazu können unter der Bezeichnung RFID (Radiofrequenzidentifikation) bekannte Systeme eingesetzt werden. Dabei erfolgt die Kommunikation zwischen einem Lesegerät und einem Transponder mittels durch das Lesegerät erzeugter magnetischer Wechselfelder oder durch Radiowellen. Passive Transponder ziehen die benötigte Arbeitsenergie aus einem elektromagnetischen Feld des Lesegeräts. Außerdem sind aktive Transponder bekannt, die beispielsweise eine eigene batteriegestützte Stromversorgung aufweisen.

Optische Systeme bilden eine weitere Variante eines Transpondersystems, bei der die Kommunikation zwischen Lesegerät und Transponder auf optischer Basis erfolgt. Wie bei den RFID-Systemen setzt man insbesondere für höhere Reichweiten batterie-und/oder solargestützte Stromversorgungen ein. Im Prinzip arbeiten solche optischen Systeme, die auch unter der Bezeichnung Opto-ID bekannt sind, ähnlich wie RFID-Systeme, zeigen jedoch deutliche Unterschiede in der Informationsübertragung auf. Optisch kann die zu übertragende Information zielgerichtet ausgesandt und auch zielgerichtet empfangen werden. Solange eine Sichtverbindung zwischen Lesegerät und Transponder besteht, ist eine Störung durch eine Metallumgebung oder andere Umwelteinflüsse wie beispielsweise Feuchtigkeit, elektromagnetische Felder und/oder Funkstörungen ausgeschlossen. Ein Opto-ID-Transponder kann so zum Beispiel an einem Werkzeug oder einem Container in einem Sackloch aus Metall untergebracht werden und dennoch Reichweiten von mehreren Metern problemlos gewährleisten. Außerdem können Opto-ID-Systeme gegen missbräuchliches Auslesen geschützt werden. Bei einer Verwendung als Schlüssel, kann der Transponder beispielsweise einfach in einer Hosentasche verstaut werden und ist damit optisch nicht mehr ansprechbar.

Aus der EP 2 332 269 B1 ist ein Verfahren für einen optischen Transponder bekannt. Dieser weist eine Datenaussendeeinheit und eine Daten empfangende Empfangseinheit auf. Der Transponder sendet zumindest zeitabschnittsweise selbsttätig optische Signale aus und weist eine autarke Energieversorgung auf. Eine Kommunikation mit einem Lesegerät kommt dadurch zustande, dass zumindest eines der selbsttätig ausgesendeten optischen Signale von dem Lesegerät empfangen und gegebenenfalls beantwortet und/oder weiterverarbeitet wird.

Bei der WO 2017/148760 A1 weist ein Transponder wenigstens eine Aufweckeinheit und wenigstens eine Datenaustauscheinheit zur bidirektionalen Datenkommunikation mit wenigstens einem Lesegerät auf, insbesondere zur Erfassung und/oder Steuerung einer Zugangsberechtigung zu Räumen oder Objekten, wobei das Lesegerät zumindest zeitabschnittsweise Signale selbsttätig aussendet. Dadurch dass die Aufweckeinheit dauerhaft für Signale zum Start der Datenkommunikation zwischen Transponder und Lesegerät empfangsbereit ist, wird eine Vorrichtung zur Verfügung gestellt, bei der ein Transponder dauerhaft auf Anfragen einer Leseeinheit ohne wesentlichen Zeitverlust reagieren kann und dabei eine lange Betriebsdauer erreicht.

Ausgehend von diesem Stand der Technik, ist ein Aufgabe der vorliegenden Erfindung, eine besonders stromsparende Alternative zum optischen Übertragen von Daten bereitzustellen, insbesondere eine besonders stromsparende und dennoch gut ansprechbare Transpondervorrichtung, die insbesondere über Zeiträume von deutlich über 10 Jahren energieautark und/oder netzunabhängig betreibbar ist.

Die Aufgabe wird bei einem Verfahren zum Übertragen von Daten zwischen einer Transpondervorrichtung und einer Lesevorrichtung durch selbsttätiges periodisches wechselweises Empfangsbereithalten und Nichtempfangsbereithalten der Transpondervorrichtung, periodisches Aussenden eines optischen Wecksignals mittels der Lesevorrichtung, Empfangsbereithalten der Lesevorrichtung jeweils zwischen den Wecksignalen für eine Antwort der Transpondervorrichtung, Empfangen eines der Wecksignale mittels der Transpondervorrichtung, Übermitteln eines optischen Startsignals von der Transpondervorrichtung an die Lesevorrichtung als Antwort auf das Empfangen des Wecksignals und Starten des Übertragens der Daten in Abhängigkeit des Wecksignals und/oder des Übermittelns des Startsignals gelöst.

Während des Nichtempfangsbereithaltens kann elektrische Energie eingespart werden. Dadurch ist die Transpondervorrichtung beispielsweise mittels einer Batterie deutlich über 10 Jahre energieautark und/oder mittels einer Solarzelle quasi zeitlich unbegrenzt netzunabhängig betreibbar. Die Transpondervorrichtung weist bevorzugt einen aktiven Transponder auf. Im Rahmen dieser Erfindung kann unter "aktiver Transponder" verstanden werden, dass entweder eine autarke Energieversorgung vorhanden ist oder ein Wandler zum Gewinnen von Energie, beispielsweise eine Fotodiode oder Fotozelle. Dabei werden auch diejenigen Transponder als aktiv bezeichnet, die kurz vor einem Auslesen von der Lesevorrichtung mit Licht bestrahlt werden, das Licht in elektrische Energie umwandeln und diese für einen aktiven Vorgang verwenden, gegebenenfalls dafür die so gewonnene elektrische Energie kurzzeitig zwischenspeichern. Die autarke Energieversorgung kann eine handelsübliche Knopfzelle aufweisen.

Grundsätzlich wird zum Empfangsbereithalten eine gewisse Menge Strom verbraucht. Durch das regelmäßige Nichtempfangsbereithalten kann im Vergleich zum dauerhaften Empfangsbetrieb elektrische Energie eingespart werden. Damit kann beispielsweise der Stromverbrauch um Größenordnungen verringert werden. Dadurch, dass die Lesevorrichtung periodisch das Wecksignal aussendet, kann während des Empfangsbereithaltens bzw. eines entsprechenden Empfangsfensters eines der Wecksignale von der Transpondervorrichtung empfangen werden und dadurch das Übertragen der Daten gestartet werden. Insbesondere kann als Antwort ein unmittelbares Übermitteln des optischen Startsignals von der Transpondervorrichtung an die Lesevorrichtung erfolgen. Das Wecksignal kann einen Pingvorgang zwischen der Lesevorrichtung und der Transpondervorrichtung auslösen, dem die eigentliche Übertragung der Daten folgt. Im Rahmen dieser Erfindung kann unter Pingvorgang verstanden werden, dass zumindest eine erste Datenmenge, beispielsweise das Wecksignal, ausgesendet und als Reaktion daraufhin von einem Empfänger der ersten Datenmenge als Antwort eine zweite Datenmenge, beispielsweise das optische Startsignal, zurückgesendet wird. Die jeweilige Datenmenge kann zumindest ein Bit aufweisen. Der Pingvorgang erfolgt also mittels des Wecksignals und des als Antwort von der Transpondervorrichtung aktiv ausgesendeten Startbits bzw. optischen Startsignals. Daraufhin kann eine Datenstrecke zum Übertragen der Daten zwischen der Lesevorrichtung und der Transpondervorrichtung etabliert werden, die gegebenenfalls durch ein entsprechendes Stoppsignal wieder beendet werden kann. Eine Periode der Wecksignale kann auf eine Zeitdauer des Empfangsbereithaltens so abgestimmt sein, dass auf jeden Fall zumindest eines der Wecksignale empfangen wird. Außerdem kann eine Periode des wechselweise Empfangs- und Nichtempfangsbereithaltens auf eine geforderte maximal zulässige Auslesezeit bei der Annäherung abgestimmt sein. Mittels der Lesevorrichtung kann gesichert eine Kommunikation gestartet werden, quasi so wie wenn die Transpondervorrichtung dauerhaft empfangsbereit wäre.

Unter periodisch kann in dieser Anmeldung ein wiederkehrendes Ereignis verstanden werden, wobei gegebenenfalls unterschiedliche Muster, beispielsweise unterschiedliche Zeitdauern für das Empfangsbereithalten und das Nichtempfangsbereithalten und/oder unterschiedliche Zeitabstände zwischen den einzeln ausgesendeten Wecksignalen ebenfalls unter wiederkehrend bzw. periodisch verstanden werden können. Die Transpondervorrichtung kann einen Wartezustand einnehmen, in dem das periodische wechselweise Empfangsbereithalten und Nichtempfangsbereithalten erfolgt. Dieser Wartezustand ist auf Grund des periodischen Nichtempfangsbereithaltens vergleichsweise stromsparend, wobei eine besonders stromsparende Betriebsweise dann möglich ist, wenn das Empfangsfenster bzw. Empfangsbereithalten möglichst kurz ist. Durch das Empfangen eines der Wecksignale beginnt das Übertragen der Daten. Nach erfolgreichem Übertragen der Daten ist die Transpondervorrichtung automatisch wieder wartend.

Bei einer bevorzugten Ausführungsform des Verfahrens wird die Transpondervorrichtung für die Dauer eines Einschaltintervalls mit einer elektrischen Energie versorgt. Dadurch erfolgt das Empfangsbereithalten. Während des Übertragens der Daten wird die Transpondervorrichtung ebenfalls mit der elektrischen Energie versorgt. Während des Nichtempfangsbereithaltens wird der Transponder für die Dauer eines Ausschaltintervalls stromlos oder zumindest im Wesentlichen stromlos geschaltet.

Zum Versorgen mit elektrischer Energie und anschließendem stromlos schalten, kann die Transpondervorrichtung einer elektrischen Energiequelle nachgeschaltet bzw. an diese angeschlossen sein und/oder eine solche aufweisen. Die elektrische Energiequelle kann dazu getaktet sein und/oder die Transpondervorrichtung weist ein dazu geeignetes elektrisches Schaltelement auf.

Unter im Wesentlichen stromlos kann verstanden werden, dass die Transpondervorrichtung oder ein Transponder der Transpondervorrichtung bis auf eventuell verbleibende Leckageströme eventueller elektrischer Schaltelemente stromlos und/oder von der geschalteten elektrischen Energiequelle abgetrennt ist. Dies kann mittels der elektrischen Energiequelle erzielt werden.

Durch die beginnende Versorgung mit der elektrischen Energie ist die Transpondervorrichtung aufweckbar und es beginnt das Empfangsbereithalten. Während des Empfangsbereithaltens erfolgt entweder ein Warten auf eines der Empfangssignale oder das Beginnen des Übertragens der Daten. Die Transpondervorrichtung bzw. der Transponder der Transpondervorrichtung ist also entweder stromlos; bestromt und empfangsbereit für das Wecksignal; oder bestromt und datenübertragend. Die Transpondervorrichtung kann einen Datenspeicher zum Speichern und/oder Bereitstellen der zu übertragenden Daten aufweisen.

Um eine gesicherte Datenübertragung größerer Datenmengen zu ermöglichen, ist es möglich, das Einschaltintervall auf die Länge eines Transponder-Übertragungsintervalls zu verlängern sobald ein Übertragen der Daten erfolgt. Dazu kann das Einschaltintervall dann verlängert werden, wenn eines der Wecksignale empfangen wurde und/oder das Übertragen der Daten begonnen hat. Die Übertragung der Daten erfolgt während des verlängerten Einschaltintervalls. Nach einer erfolgreichen Übertragung der Daten kann ein Übermitteln eines Stoppsignals erfolgen. Dabei ist es grundsätzlich möglich, dass die Lesevorrichtung oder die Transpondervorrichtung das Stoppsignal aussendet und die jeweils andere dieses empfängt. Dadurch ausgelöst kann ein Beenden des Übertragens der Daten erfolgen. Nach Ende einer jeweiligen erfolgreichen Datenübertragung wird optional ermittelt, ob sich die Transpondervorrichtung noch in einem Sendebereich der Lesevorrichtung befindet und solange dies der Fall ist keine neue Übertragung der Daten gestartet. Dies kann durch periodisches Empfangen und Unbeantwortetlassen der Wecksignale erfolgen. Erst nach Entfernen der Transpondervorrichtung aus dem Sendebereich und einer erneuten Annäherung kann dann das Übertragen der Daten durch Empfangen und Beantworten eines Wecksignals wieder starten. Ob die Datenübertragung erfolgreich war, kann beispielsweise durch ein Prüfbit ermittelt werden. Gemäß einer weiteren Alternative erfolgt das Übertragen grundsätzlich innerhalb des nicht verlängerten Einschaltintervalls. Dadurch können kleinere Datenmengen übertragen und ein Steuerungsaufwand für das Empfangsbereithalten und Nichtempfangsbereithalten vereinfacht werden und/oder unabhängig von der Datenübertragung erfolgen.

Bei einer weiteren Ausgestaltung des Verfahrens erfolgt ein Versorgen der Transpondervorrichtung mit der elektrischen Energie kleiner 250 nA, beispielsweise bei einer Spannung von 2,5 bis 3,3 V. Diese Stromstärken können von einer handelsüblichen Knopfzelle, beispielsweise mit 3 V und 220 mAh rechnerisch länger als 30 Jahre bereitgestellt werden. Im Idealfall ergibt sich beispielsweise eine Kapazitätsreduzierung der Batterie von weniger als 2,5 mAh pro Jahr für das zeitweise periodische Empfangsbereithalten. Dies beinhaltet vorzugsweise bereits einen Verbrauch zwischen 20 und 30 nA für das Erzeugen des Taktes der elektrischen Energiequelle. Zum Erzielen so geringer Stromstärken kann das Ausschaltintervall/Nichtempfangsbereithalten um mehrere Zehnerpotenzen größer sein als das Einschaltintervall/Empfangsbereithalten, beispielsweise mehr als 5 Zehnerpotenzen. Je nachdem wie eine Annäherung der Lesevorrichtung und der Transpondervorrichtung aneinander von Statten geht und wie lange diese dauert, kann das Ausschaltintervall entsprechend verkürzt oder verlängert werden. Bei einer nur sehr kurzzeitigen Annäherung ist es denkbar, das Ausschaltintervall auf wenige Millisekunden zu verkürzen, wobei die Gesamtstromaufnahme der Transpondervorrichtung immer noch vergleichsweise gering ist. Unter der Voraussetzung einer Versorgung der Transpondervorrichtung mit einer getakteten elektrischen Energiequelle, die insbesondere einen Taktgenerator aufweist, und durchschnittlichen zu übertragenden Datenmengen sowie Annäherungszeiten, wie sie beispielsweise zur Kennzeichnungs- und/oder Dokumentationszwecken von produzierten Gütern erforderlich sind, hat sich ein Ausschaltintervall von circa 0,1 Sekunden und ein Einschaltintervall von circa 1,5 µs als besonders vorteilhaft herausgestellt. Trotz des geringen Stromverbrauchs ist es dann also möglich circa 10-mal pro Sekunde die Transpondervorrichtung durch das Wecksignal aufzuwecken.

Vorzugsweise erfolgt das Übertragen der Daten mittels einer optischen elektromagnetischen Strahlung, beispielsweise mittel sichtbarem, infrarotem und/oder ultraviolettem Licht. Die Lesevorrichtung und die Transpondervorrichtung können dazu entsprechende optische Sendeempfangselemente, beispielsweise Leuchtdioden und/oder Photodioden aufweisen. Mit geeigneten Schaltungsmaßnahmen lassen sich die Photodioden auch fremdlichtunabhängig betreiben, also bei einer üblichen Beleuchtungsstärke bis hin zu vollem Sonnenlicht. Eine optische Übertragung kann durch vergleichsweise einfache Maßnahmen zielgerichtet erfolgen. Dadurch können Signale sicherer gesendet und empfangen werden.

Schließlich ist es möglich, dass das selbsttätige periodische wechselweise Empfangsbereithalten und Nichtempfangsbereithalten des Transponders ein Taktzittern aufweist. Unter einem Taktzittern kann eine bewusste Ungenauigkeit des Taktes der elektrischen Energiequelle verstanden werden. Dies führt dazu, dass ein unerwünschtes gescheitertes Übertragen der Daten durch doppeltes Antworten von zwei der Transpondervorrichtungen bereits in einem der Nachfolgetakte wegen dem Taktzittern zeitlich auseinanderläuft und dadurch jeweils fehlerfrei nachgeholt werden kann.

Die Aufgabe ist außerdem durch eine Schaltungsanordnung zum optischen Übertragen von Daten gelöst. Diese weist eine Transpondervorrichtung zum drahtlosen Senden und Empfangen der Daten auf, mittels der zum Starten des Übertragens der Daten ein von einer Lesevorrichtung ausgesendetes Wecksignal empfangbar ist. Vorteilhaft ist vorgesehen, dass die Transpondervorrichtung periodisch wechselweise für das von der Lesevorrichtung ausgesendete Wecksignal empfangsbereit ist und anschließend stromlos oder zumindest im Wesentlichen stromlos ist. Die Schaltungsanordnung ist insbesondere eingerichtet, ausgelegt, konstruiert und/oder programmiert zum Durchführen eines vorab beschriebenen Verfahrens. Es ergeben sich die vorab beschriebenen Vorteile.

Bei einem Ausführungsbeispiel der Schaltungsanordnung ist der Transpondervorrichtung zum Empfangsbereithalten und stromlos Schalten eine getaktete elektrische Energiequelle vorgeschaltet. Durch die elektrische Energiequelle ist besonders bevorzugt die Schaltungsanordnung für einen Zeitraum von größer 30 Jahren energieautark und/oder netzunabhängig betreibbar, wobei dennoch während des empfangsbereiten Zustandes eine gewünschte Ansprechbarkeit durch die Lesevorrichtung erzielbar ist. Die elektrische Energiequelle kann einen Taktgenerator, eine Batterie aufweisen und/oder eine Solarzelle aufweisen. Durch die jeweils erfolgenden Phasen ohne Strom kann eine vergleichsweise niedrige durchschnittliche Gesamtstromaufnahme erzielt werden. Die Transpondervorrichtung ist also wechselweise, zum Einsparen der elektrischen Energie stromlos; zum Ermöglichen des Empfangens des Wecksignals bestromt; oder beim Versenden der Daten datenversendend und bestromt. Unter netzunabhängig oder energieautark kann verstanden werden, dass die Transpondervorrichtung die eigene elektrische Energiequelle aufweist, beispielsweise mit einer handelsüblichen Knopfzelle und/oder einem Kondensator und/oder eine Photozelle. Mittels des vorhandenen Taktgenerators der Schaltungsanordnung kann die Transpondervorrichtung für ein Einschaltintervall einschaltbar und für ein Ausschaltintervall ausschaltbar sein. Die elektrische Energiequelle ist dazu dem Transponder der Transpondervorrichtung vorgeschaltet. Der Taktgenerator liefert also bevorzugt während des Einschaltintervalls die elektrische Energie und schaltet während des Ausschaltintervalls die Transpondervorrichtung bzw. den Transponder der Transpondervorrichtung ab. Es kann eine mittlere Stromaufnahme kleiner als 250 nA bei einer Versorgungsspannung zwischen 2,5 und 3,3 V erzielt werden.

Vorzugsweise kann die Schaltungsanordnung eine Verstärkerschaltung aufweisen, die einer optischen Empfangsvorrichtung nachgeschaltet ist. Diese kann beispielsweise vier hintereinandergeschaltete separate Transistoren aufweisen. Es ist möglich, das Einschaltintervall möglichst kurz zu wählen um den Verbrauch weiter abzusenken und dennoch die Übertragung der Daten zu gewährleisten. Ferner ist es denkbar, dass die Verstärkerschaltung während des Empfangsbereithaltens der einzige wesentliche Stromverbraucher ist. Der vorab beschriebene Gesamtstromverbrauch der Transpondervorrichtung geht dann also im Wesentlichen lediglich auf die Verstärkerschaltung und den Taktgenerator zurück.

Ferner ist es möglich, dass zum Starten des Übertragens der Daten und als Antwort auf eines der Wecksignale mittels der Transpondervorrichtung ein Startsignal an die Lesevorrichtung übermittelbar ist. Das Übertragen der Daten erfolgt also bevorzugt erst, wenn eine gegenseitige Verständigung mittels des Wecksignals und des Starsignals erfolgreich durchgeführt wurde. So kann vor dem Starten der Datenübertagung sichergestellt werden, dass die dafür erforderliche optische Strecke bidirektional aufbaubar ist.

Die Aufgabe ist schließlich durch ein optisches Datenübertragungsset zum Übertragen von Daten gelöst. Das Datenübertragungsset weist eine vorab beschriebene Schaltungsanordnung sowie eine Lesevorrichtung auf, mittels der zum Starten des Übertragens der Daten periodisch ein Wecksignal an eine Transpondervorrichtung des Datenübertragungssets sendbar ist. Insbesondere ist das Datenübertragungsset zum Durchführen eines vorab beschriebenen Verfahrens eingerichtet, ausgelegt, konstruiert und/oder programmiert. Es ergeben sich die vorab beschriebenen Vorteile.

Weitere Vorteile ergeben sich aus den Unteransprüchen und der nachfolgenden Beschreibung bevorzugter Ausführungsbeispiele. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Im Folgenden wird die Erfindung anhand von in den beigefügten Figuren dargestellten Ausführungsbeispielen näher erläutert. Es zeigen:
- Fig. 1: zeitliche Verläufe eines wechselweise periodischen Empfangsbereithaltens und Nichtempfangsbereithaltens einer Transpondervorrichtung im Vergleich zu einem periodischen Aussenden eines Wecksignals mittels einer Lesevorrichtung eines optischen Datenübertragungssets zum Übertragen von Daten;
- Fig. 2: die zeitlichen Verläufe wie in Figur 1 dargestellt, jedoch im Unterschied während einer Übertragung der Daten;
- Fig. 3: ein Blockschaltbild einer Schaltungsanordnung zum Übertragen von Daten;
- Fig. 4: eine stark schematisierte Darstellung eines optischen Datenübertagungssets zum Übertragen von Daten mit einer Vielzahl von optischen Transpondervorrichtungen, die mittels einer Lesevorrichtung ansprechbar und/oder auslesbar sind;
- Fig. 5: eine stark schematisierte Darstellung einer Lesevorrichtung und einer Transpondervorrichtung; und
- Fig. 6: eine schematische Darstellung eines Taktzitterns jeweils eines Taktes zum Empfangsbereithalten der in Figur 4 dargestellten Transpondervorrichtungen.
Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

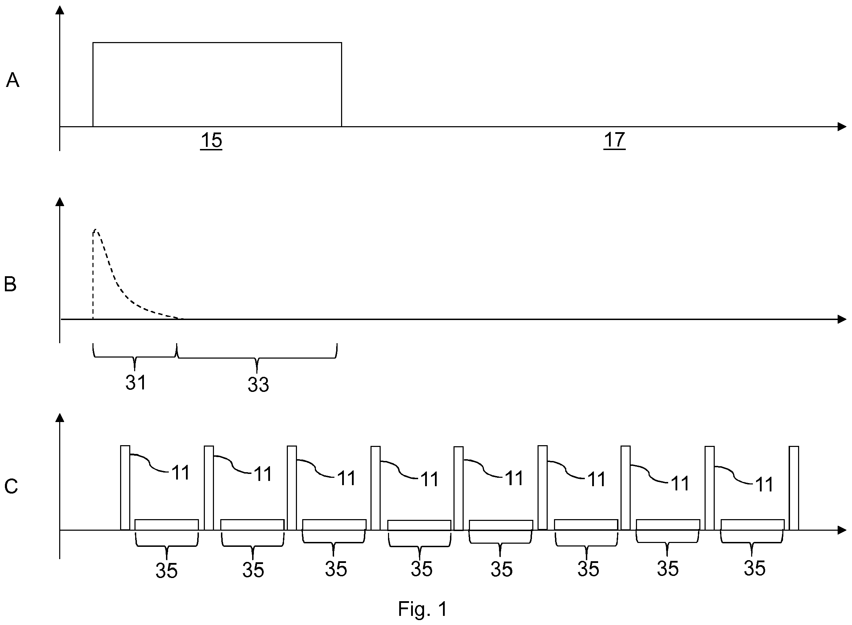

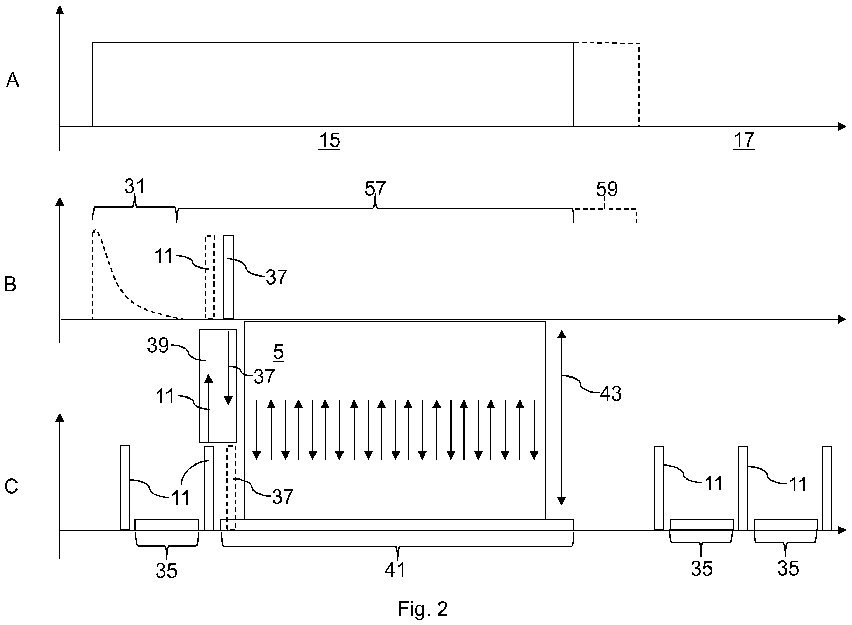

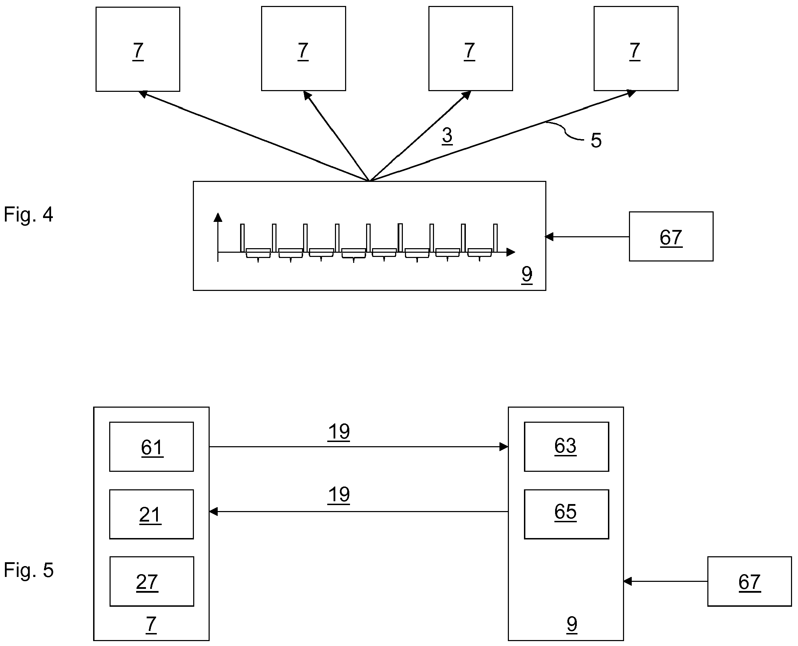

Figur 1 zeigt unterschiedliche zeitliche Verläufe A, B und C bei einem Datenübertragungsset 3, das in Figur 4 dargestellt ist und zum Übertragen von Daten 5 zumindest eine Transpondervorrichtung 7 und eine Lesevorrichtung 9 aufweist. Die Transponder-/Lesevorrichtung 7 und 9 können jeweils als optische Sendeempfangsvorrichtung ausgeführt sein. Figur 2 zeigt die in Figur 1 dargestellten Verläufe, jedoch während einer Übertragung der Daten 5 zwischen der Lesevorrichtung 7 und der Transpondervorrichtung 9.

Im Einzelnen zeigen die Figuren 1 und 2 jeweils einen Zeitlichen Verlauf A eines Einschaltintervalls 15 sowie daran anschließend eines Ausschaltintervalls 17. Während des Einschaltintervalls 15 ist die Transpondervorrichtung 7 des Datenübertragungssets 3 bestromt. Daran anschließend, also während des Ausschaltintervalls 17 ist die Transpondervorrichtung 7 stromlos oder zumindest im Wesentlichen stromlos, also nicht bestromt. Das Ausschaltintervall 17 ist nur teilweise dargestellt und ist vorzugsweise um Größenordnungen größer als das Einschaltintervall 15. Insbesondere beträgt das Ausschaltintervall 17 circa 0,1 Sekunden. Das Einschaltintervall 15 beträgt lediglich circa 1,5 µs, vorzugsweise zwischen 1 µs und 5 µs. Grundsätzlich ist das Ausschaltintervall 17 beliebig verlängerbar oder verkürzbar und dadurch an unterschiedlich schnelle Vorgänge wie sehr schnelle Produktionsumgebungen oder statische Anwendungen wie beispielsweise Containerlager anpassbar. Dementsprechend kann bei Anwendungen mit geringen Anforderungen an eine Auslesehäufigkeit und/oder Reaktionszeit auf Ausleseanfragen der Stromverbrauch der optischen Verstärkerschaltung 23 nochmals reduziert werden. Der zeitliche Verlauf B zeigt ein Einschwingverhalten der Transpondervorrichtung 7, ausgelöst durch das Bestromen während des Einschaltintervalls 15. Während eines Weckintervalls 31 findet in der Transpondervorrichtung 7 ein Einschwingvorgang statt, wobei diese in einen empfangsbereiten Zustand wechselt. Der empfangsbereite Zustand wird während eines Empfangsintervalls 33 aufrechterhalten, das sich dem Weckintervall 31 anschließt. Das Weckintervall 31 und das Empfangsintervall 33 dauern addiert zumindest so lange wie das Einschaltintervall 15. Die Transpondervorrichtung 7 ist dann empfangsbereit und wartet auf ein möglicherweise empfangbares Wecksignal 11. Sobald die Stromversorgung am Ende des Einschaltintervalls 15 endet, ist die Transpondervorrichtung 7 stromlos und wird nicht empfangsbereit gehalten. Dieser Zustand dauert während des Ausschaltintervalls 17, also solange bis sich zyklisch das nächste Einschaltintervall 15 anschließt, das in den Figuren 1 und 2 nicht mehr dargestellt ist.

In dem nicht mehr dargestellten periodisch folgenden Einschaltintervall 15 erfolgt erneut ein Aufwachen während des Weckintervalls 31 und des sich daran anschließenden Empfangsintervalls 33. Wie in Figur 1C dargestellt, sendet die Lesevorrichtung 9 periodisch bzw. zyklisch ein Wecksignal 11 aus. Zwischen den Wecksignalen 11 ist die Lesevorrichtung 9 jeweils für ein Startsignal 37 - in Figur 2 dargestellt - jeweils für die Dauer eines weiteren Empfangsintervalls 35 empfangsbereit. Ein entsprechendes durch das Startsignal 37 ausgelöstes Empfangssignal der Lesevorrichtung 9 ist in Figur 2C gestrichelt angedeutet. Das Wecksignal 11 hat beispielsweise eine Zeitdauer von 30 ns. Das Wecksignal 11 wird periodisch von der Lesevorrichtung 9 ausgesendet, wobei eine Periodendauer bevorzugt kleiner ist als das Empfangsintervall 33 der Transpondervorrichtung 7. Dadurch kann gewährleistet werden, dass bei einer Annäherung im nächstfolgenden Empfangsintervall 33 auf jeden Fall eines der Wecksignale 11 von der Transpondervorrichtung 7 empfangen werden kann. Bevorzugt ist die Periodendauer des periodisch ausgesendeten Wecksignals 11 kleiner als die Hälfte des Empfangsintervalls 33. Eine Taktfrequenz des Wecksignals beträgt entsprechend beispielsweise 2 Mhz oder zwischen 1 und 20 Mhz. Dadurch kann sichergestellt werden, dass bei jedem der Empfangsintervalle 33 auf jeden Fall eines der Wecksignale 11 empfangen werden kann.

Wie in Figur 2B zu gestrichelt dargestellt, wird das Wecksignal 11 von der Transpondervorrichtung 7 empfangen und mit dem Startsignal 37, beispielsweise einem Startbit, von der Transpondervorrichtung 7 beantwortet. Diese Antwort empfängt die Lesevorrichtung 9, was in Figur 2C gestrichelt eingezeichnet ist. Dadurch kann ein Pingvorgang 39 zwischen der Transpondervorrichtung 7 und der Lesevorrichtung 9 erfolgen. Ausgelöst durch den Pingvorgang 39 bzw. die Antwort, also das Startsignal 37 findet die Übertragung der Daten 5 statt, wobei die Lesevorrichtung 9 das Senden weiterer Wecksignale 11 aussetzt und das zum Empfangen des Startsignals 37 verwendete weitere Empfangsintervall 35 der Lesevorrichtung 9 auf die Länge eines Lesegerät-Übertragungsintervalls 41 anpasst oder vergrößert. Die Übertragung der Daten 5 kann nach dem Pingvorgang 39 mit einem Handshake beginnen, gefolgt von zumindest einem Datenwort. Je nach Anwendungsfall kann die Menge der zu übertragenden Daten 5 variieren. Die dafür benötigte Zeit kann die Länge des Einschaltintervalls 15 übersteigen. Daher wird bevorzugt das Einschaltintervall 15 gegebenenfalls bis zum Ablauf eines Transponder-Übertragungsintervalls 57 verlängert. Das Transponder-Übertragungsintervall 57 endet entweder nach Übertragung eines Stoppsignals 43 oder wenn für ein Warteintervall 59 keine Übertragung der Daten 5 mehr erfolgt ist. Das optional zusätzlich um das Warteintervall 59 längere Transponder-Übertragungsintervall 57 ist in Figur 2 gestrichelt angedeutet. Während des Lesegerät-Übertragungsintervalls 41 bzw. des Transponder-Übertragungsintervalls 57 findet die Übertragung der Daten 5 statt, ist also die Lesevorrichtung 9 für von der Transpondervorrichtung 7 gesendete Daten 5 empfangsbereit. Das Übertragen der Daten 5 kann einseitig oder bidirektional erfolgen. Zum Beenden des Übertragens der Daten 5 kann zwischen der Lesevorrichtung 7 und der Transpondervorrichtung 9 das Stoppsignal 43 übertragen werden. Dabei spielt es keine Rolle, welche der der Lesevorrichtung 7 und der Transpondervorrichtung 9 das Übertragen der Daten 5 beendet. Sobald das Übertragen der Daten 5 beendet ist, also gegebenenfalls das Stoppsignal 43 übertragen wurde oder die Kommunikation für die Zeit des Warteintervalls 59 abgebrochen ist, beginnt die Lesevorrichtung 9 erneut zyklisch das Wecksignal 11 auszusenden, wobei diese zwischen den Wecksignalen 11 während des jeweiligen Empfangsintervalls 35 empfangsbereit ist. Alternativ ist es denkbar, dass das weitere Empfangsintervall 35 auch während des Aussendens der Wecksignale 11 andauert, also die Lesevorrichtung 9 unabhängig vom Senden der Wecksignale 11 durchgehend empfangsbereit ist. Ferner ist es möglich, das gesamte Übertragen der Daten 5 innerhalb des nicht verlängerten Einschaltintervalls 15 unterzubringen.

Um eine sofortiges erneutes Beginnen des Übertragens der Daten 5 und damit unnötigen Energieverbrauch durch doppeltes Übertragen von identischen Daten zu verhindern, kann die Transpondervorrichtung 7 für alle dem Transponder-Übertragungsintervall 57 direkt folgenden Einschaltintervalle 15 so geschaltet werden, dass diese trotz eines empfangenen und/oder empfangbaren Wecksignals 11 kein Startsignal 37 aussendet. Es wird also insbesondere trotz eines empfangenen Wecksignals 11 kein Pingvorgang 39 gestartet. Dadurch ist sichergestellt, dass das Übertragen der Daten 5 nicht erneut beginnt, wenn sich die Transpondervorrichtung 7 nach einer erfolgreichen Übertragung der Daten 5 noch eine gewisse Zeit in einem Sendebereich der Lesevorrichtung 9 befindet oder dort versehentlich längere Zeit verbleibt. Erst wenn für eine vorgegebene oder vorgebbare Zeit kein Wecksignal 11 mehr empfangen wurde, wird bei einem erneuten Empfang eines der Wecksignale 11 wieder ein Pingvorgang 39 gestartet. Analog kann auch die Lesevorrichtung 9 ein ungewolltes doppeltes Übertragen der Daten 5 verhindern. Dazu kann beispielsweise ein unmittelbar nach einer erfolgreichen Übertragung der Daten 5 wieder empfangenes Startsignal 37 ignoriert werden, also trotz Empfang des Startsignals 37 durch die Lesevorrichtung 9 keine erneute Übertragung der Daten 5 begonnen werden. Üblicherweise beträgt das Weckintervall 31 bevorzugt 0,5 µs und das Empfangsintervall 33 1 µs, sodass das Einschaltintervall beispielsweise 1,5 µs beträgt.

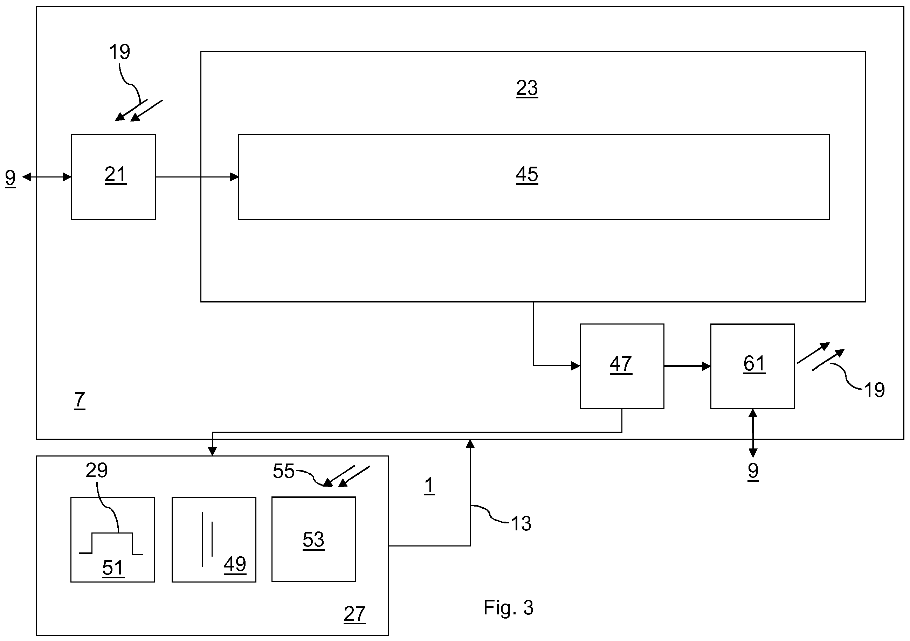

Figur 3 zeigt ein Blockschaltbild einer Schaltungsanordnung 1 zum Übertragen der in Figur 2 dargestellten Daten 5. Die Schaltungsanordnung 1 weist die Transpondervorrichtung 7 des in Figur 4 dargestellten Datenübertagungssets 3 auf. Eine Übertragung der Daten 5 ist mittels eines Doppelpfeils und die Lesevorrichtung 9 lediglich mittels des Bezugszeichens 9 in Figur 3 angedeutet. Zum Senden und Empfangen der Daten 5 weist die Transpondervorrichtung 7 der Schaltungsanordnung 1 eine optische Empfangsvorrichtung 21 auf. Bei der optischen Empfangsvorrichtung 21 kann es sich um eine Photodiode handeln.

Die optischen Empfangsvorrichtung 21 wird wie in Figur 1 beschrieben während des Empfangsintervalls 33, also nach Aufwecken während des Weckintervalls 31 zum Empfangen des Wecksignals 11 empfangsbereit gehalten. Dazu ist der optischen Empfangsvorrichtung 21 eine Verstärkerschaltung 23 nachgeschaltet. Die Verstärkerschaltung 23 weist zumindest ein elektrisches Verstärkungselement 45 auf. Dieses Verstärkungselement 45 kann unter der Annahme einer Bestromung mit 3 Volt eine Stromaufnahme von 2,7 mA aufweisen. Diese vergleichsweise hohe Stromaufnahme, die für ein dauerhaftes Empfangsbereithalten der Schaltungsanordnung 1, genauer der Transpondervorrichtung 7 benötigt würde kann durch das periodische Ausschalten jeweils während des Ausschaltintervalls 17 um einen Faktor reduziert werden. Der Faktor entspricht dem Quotienten des Eischaltintervalls 15 zu einer Periodendauer. Die Periodendauer ergibt sich aus der Summe des Einschaltintervalls 15 und des Ausschaltintervalls 17. Je nach Gestaltung des Einschaltintervalls 15 und des Ausschaltintervalls 17 kann eine gemittelte Stromaufnahme der Verstärkerschaltung 23 von kleiner als 250 nA werden, wobei bevorzugt ein Stromverbrauch für das Takten der elektrischen Energiequelle 51 bzw. eines Taktgenerators 51 bereits enthalten ist.

Für den Fall, dass das Wecksignal 11 mittels der Verstärkerschaltung 23 verstärkt beziehungsweis erkannt wurde, wird ein Ausgangssignal der Verstärkerschaltung 23 von einer dieser nachgeschalteten Auswerteschaltung 47 ausgewertet bzw. weiterverarbeitet, sodass die in Figur 2 dargestellten Abläufe zum Übertragen der Daten 5 durchgeführt werden können. Dementsprechend kann die Schaltungsanordnung 1 in Figur 3 nicht näher dargestellte Elemente zum Verarbeiten, Speichern und/oder Senden der Daten 5 aufweisen. Zum Senden der Daten 5 steuert die Auswerteschaltung 47 dazu beispielsweise eine optische Sendevorrichtung 61 an. Die optische Sendevorrichtung 61 kann eine optische Sendediode aufweisen. Vorzugsweise ist die Auswerteschaltung 47 so ausgelegt, dass diese nur im Falle eines erzeugten Ausgangssignals der Verstärkerschaltung 23 eine wesentliche Stromaufnahme aufweist. Insbesondere ist die Auswerteschaltung 47 für den Fall, dass die Verstärkerschaltung 23 kein Ausgangssignal erzeugt, stromlos oder bis auf eventuelle Leckageströme im Wesentlichen stromlos. Die Auswerteschaltung 47 kann bevorzugt auch die elektrische Energiequelle 27 ansteuern, insbesondere zum Erhalten der Stromversorgung nach Durchführen des Pingvorgangs 39 bzw. während des Übertragens der Daten 5.

Die Verstärkerschaltung 23 kann geeignete Schaltungsmittel für eine schnelle Aufweckbarkeit und/oder eine kurze Einschwingzeit aufweisen, beispielsweise pro Verstärkerelement 45 jeweils aufweckbare separate elektrische Bauelemente, ein geeignetes Substrat und/oder eine dafür ausgelegte integrierte Schaltung. Dadurch kann das Weckintervall 31 verkürzt werden, beispielsweise auf kleiner gleich 0,5 µs. Das Übertragen der Daten 5 erfolgt vorzugsweise ebenfalls über die optische Empfangsvorrichtung 21, der dieser nachgeschalteten Verstärkerschaltung 23 sowie der dieser nachgeschalteten Auswerteschaltung 47.

Die Transpondervorrichtung 7 wird mittels einer elektrischen Energiequelle 27 der Schaltungsanordnung 1 bestromt. Die elektrische Energiequelle 27 ist dazu der Transpondervorrichtung 7 vorgeschaltet und liefert dieser während des in den Figuren 1 und 2 dargestellten Einschaltintervalls elektrische Energie 13. Die elektrische Energiequelle 27 weist vorzugsweise eine Batterie 49 und dieser nachgeschaltet den Taktgenerator 51 auf. Der Taktgenerator 51 erzeugt einen Takt 29, der während des Einschaltintervalls 15 die elektrische Energie 13 liefert und während des Ausschaltintervalls 17 die Transpondervorrichtung 7 stromlos schaltet. Alternativ oder zusätzlich kann die elektrische Energiequelle 27 eine Solarzelle 53 aufweisen. Mittels der Solarzelle 53 kann Umgebungslicht 55 und/oder von der Lesevorrichtung 9 ausgesendetes Licht in elektrische Energie gewandelt werden. Die Lesevorrichtung 9 kann dazu ein separates Leuchtmittel aufweisen. Ein damit insbesondere erzeugbarer Lichtkegel kann einen Erfassungsbereich der Lesevorrichtung 9 markieren. Dadurch kann erkannt werden, wann sich eine der Transpondervorrichtungen 7 in dem von der Lesevorrichtung 7 auslesbaren Erfassungsbereich befindet. Das Leuchtmittel kann Gleichlichtenergie aussenden, also nicht gepulstes Licht. Die so gewonnene elektrische Energie kann mittels eines in Figur 3 nicht näher dargestellten Energiespeichers, beispielsweise eines Kondensators zwischengespeichert werden. Für den Fall, dass eine Solarzelle 53 vorhanden ist, kann also der Taktgenerator 51 anstelle von der Batterie 49 mittels des Zwischenspeichers, insbesondere Kondensators, gespeist werden.

Das Austauschen der Daten 5 findet optisch statt. Dabei handelt es sich bevorzugt um sichtbares Licht 19, oder angrenzende Wellenlängen im Ultraviolett oder Infrarotbereich. Die optische Übertragung kann vorzugsweise durch geeignete Mittel zielgerichtet erfolgen.

Figur 4 zeigt eine schematische Darstellung eines Datenübertragungssets 3 zum Übertragen der Daten 5. Das Datenübertragungsset 3 weist zumindest eine, hier eine Vielzahl der Transpondervorrichtungen 7 auf. In Figur 4 sind beispielsweise 4 der Transpondervorrichtungen 7 dargestellt. Außerdem weist das Datenübertagungsset 3 eine Lesevorrichtung 9 auf, beispielsweise ein Lesegerät zum optischen Auslesen der optischen Transpondervorrichtungen 7. Wie in Figur 4 angedeutet, sendet die Lesevorrichtung 9 periodisch die Wecksignale 11 aus und ist zwischen diesen während der weiteren Empfangsintervalle 35 empfangsbereit.

In Figur 5 sind eine Transpondervorrichtung 7 und eine Lesevorrichtung 9 dargestellt. Die Transpondervorrichtung 7 verfügt über die optische Empfangsvorrichtung 21, die optische Sendevorrichtung 61 und die elektrische Energiequelle 27. Mittels der elektrischen Energiequelle 61 ist die Transpondervorrichtung 7 je nach Auslegung mittels der in Figur 3 dargestellten Batterie 49 energieautark empfangsbereit haltbar und/oder mittels der Solarzelle 53 dauerhaft netzunabhängig betreibbar. Unter energieautark empfangsbereit haltbar kann ein Betrieb - ohne Wartungsarbeiten wie ein Wechsel der Batterie 49 - über einen Zeitraum von größer als 30 Jahren verstanden werden. Alternativ oder zusätzlich kann die Transpondervorrichtung 7 bei einer durchschnittlichen Sende- und Empfangsaktivität länger als 10 Jahre energieautark betrieben werden bzw. betreibbar sein. Die Lesevorrichtung 9 weist für eine wie in den Figuren 1 und 2 dargestellte Kommunikation mit der Transpondervorrichtung 7 ebenfalls eine optische Empfangsvorrichtung 63 und eine optische Sendevorrichtung 65 auf. Im Unterschied ist die Lesevorrichtung 9 zur elektrischen Energieversorgung vorzugsweise an ein Stromnetz 67 angeschlossen und kann beispielsweise in einer Produktionsumgebung stationär montiert sein.

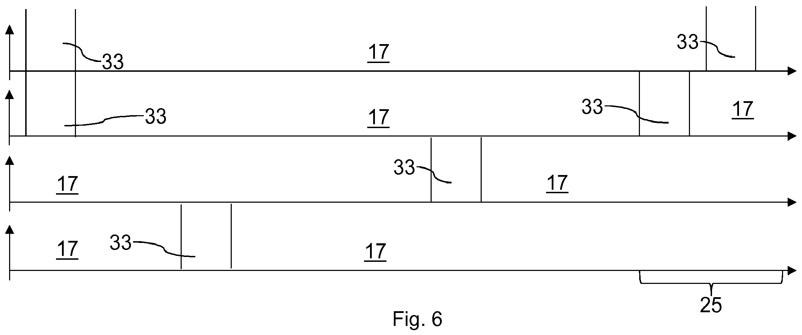

Figur 6 zeigt schematisch und nicht maßstabsgetreu 4 untereinander angeordnete zeitliche Verläufe jeweils einer der in Figur 4 dargestellten Transpondervorrichtungen 7 und deren Empfangsintervalle 33 sowie dazwischenliegenden Ausschaltintervalle 17. Es ist zu erkennen, dass die jeweiligen Taktgeneratoren 51 der Transpondervorrichtungen 7 ein Taktzittern 25 aufweisen. Das heißt, selbst wenn zufälligerweise zwei oder mehrere der Transpondervorrichtungen 7 synchronisiert sind und gleichzeitig antworten würden, was beispielhaft in Figur 6 für in den oberen zwei Verläufen dargestellt ist, fallen aufgrund des vorgegebenen oder vorgebbaren Taktzitterns 25 der jeweiligen Taktgeneratoren 51 die jeweiligen Einschaltintervalle 15 der Transpondervorrichtungen 7 bereits bei einem der nachfolgenden Einschaltintervalle 15 zeitlich wieder auseinander. Dadurch ist es möglich, störungsfrei, quasi gleichzeitig eine Vielzahl der Transpondervorrichtung 7 mittels nur einer einzigen Lesevorrichtung 9 auszulesen bzw. die Daten 5 auszutauschen. Das Datenübertragungsset 3 mit einer Vielzahl an Transpondervorrichtungen 9 kann beispielsweise über sehr lange Zeiträume wartungsfrei eingesetzt werden. Beispielsweise in Produktionsumgebungen, z.B. als umlaufende Produktionsmittel zum Dokumentieren von Produktionsschritten und/oder zum gelegentlichen Erfassen von biometrischen Daten, etc.

Es versteht sich von selbst, dass diese Beschreibung verschiedensten Modifikationen, Änderungen und Anpassungen unterworfen werden kann, die sich im Bereich von Äquivalenten zu den anhängenden Ansprüchen bewegen.

### Bezugszeichenliste

- 1: Schaltungsanordnung
- 3: Datenübertragungsset
- 5: Daten
- 7: Transpondervorrichtung
- 9: Lesevorrichtung
- 11: Wecksignal
- 13: elektrische Energie
- 15: Einschaltintervall
- 17: Ausschaltintervall
- 19: Licht
- 21: optische Empfangsvorrichtung
- 23: Verstärkerschaltung
- 25: Taktzittern
- 27: Energiequelle
- 29: Takt
- 31: Weckintervall
- 33: Empfangsintervall
- 35: weiteres Empfangsintervalls
- 37: Startsignal
- 39: Pingvorgang
- 41: Lesegerät-Übertragungsintervall
- 43: Stoppsignal
- 45: Verstärkungselement
- 47: Auswerteschaltung
- 49: Batterie
- 51: Taktgenerator
- 53: Solarzelle
- 55: Umgebungslicht
- 57: Transponder-Übertragungsintervall
- 59: Warteintervall
- 61: optische Sendevorrichtung
- 63: optische Empfangsvorrichtung
- 65: optische Sendevorrichtung
- 67: Stromnetz

## Patentansprüche

1. Verfahren zum optischen Übertragen von Daten (5) zwischen einer Transpondervorrichtung (7) und einer Lesevorrichtung (9), **gekennzeichnet durch**:
- selbsttätiges periodisches wechselweises Empfangsbereithalten und Nichtempfangsbereithalten der Transpondervorrichtung (7),
- periodisches Aussenden optischer Wecksignale (11) mittels der Lesevorrichtung (9),
- Empfangsbereithalten der Lesevorrichtung (9) jeweils zwischen den Wecksignalen (11) für eine Antwort der Transpondervorrichtung (7),
- Empfangen eines der Wecksignale (11) mittels der Transpondervorrichtung (7),
- Übermitteln eines optischen Startsignals (37) von der Transpondervorrichtung (7) an die Lesevorrichtung (9) als Antwort auf das Empfangen des einen der Wecksignale (11),
- Starten des Übertragens der Daten (5) in Abhängigkeit des einen der Wecksignale (11) und/oder des Übermittelns des Startsignals (37).

2. Verfahren nach Anspruch 1, **gekennzeichnet durch**:
- Versorgen der Transpondervorrichtung (7) mit einer elektrischen Energie (13) für ein Einschaltintervall (15) während des Empfangsbereithaltens und/oder des Übertragens der Daten (5),
- stromlos oder zumindest im Wesentlichen stromlos schalten der Transpondervorrichtung (7) für ein Ausschaltintervall (17) während des Nichtempfangsbereithaltens.

3. Verfahren nach Anspruch 2, **gekennzeichnet durch**:
- Verlängern des Einschaltintervalls (15) des Transponders (7) um die Länge eines an das Übertragen der Daten (5) angepassten Transponder-Übertragungsintervalls (57) in Abhängigkeit des Wecksignals (11) und/oder des Übermittelns des Startsignals (37) und/oder des Übertragens der Daten (5),
- Übertragen der Daten (5) innerhalb des Transponder-Übertragungsintervalls (57),
- Unterbinden eines erneuten Übertragens der Daten (5) solange sich die Transpondervorrichtung (7) noch in einem Sendebereich der Lesevorrichtung (9) befindet.

4. Verfahren nach einem der Ansprüche 2 oder 3, **gekennzeichnet durch**:
- Versorgen der Transpondervorrichtung (7) mit der elektrischen Energie (13) mit einer durchschnittlichen Stromaufnahme von kleiner 250 nA, insbesondere bei einer Spannung von 2,5 bis 3,3 V.

5. Verfahren nach einem der Ansprüche 2 bis 4, **dadurch gekennzeichnet, dass** das selbsttätige periodische wechselweise Empfangsbereithalten und Nichtempfangsbereithalten der Transpondervorrichtung (7) ein Taktzittern (25) aufweist.

6. Schaltungsanordnung (1) zum optischen Übertragen von Daten (5) zum Durchführen eines Verfahrens nach einem der Ansprüche 1 bis 5, mit einer optischen Transpondervorrichtung (7) zum drahtlosen Senden und Empfangen der Daten (5), mittels der zum Starten des Übertragens der Daten (5) ein von einer Lesevorrichtung (9) ausgesendetes Wecksignal (11) empfangbar ist, **dadurch gekennzeichnet, dass** die Transpondervorrichtung (7) selbsttätig periodisch wechselweise für das von der Lesevorrichtung (9) ausgesendete Wecksignal (11) empfangsbereit ist und anschließend für einen im Vergleich deutlich längeren Zeitraum stromlos oder zumindest im Wesentlichen stromlos ist.

7. Schaltungsanordnung nach Anspruch 6, **dadurch gekennzeichnet, dass** die Transpondervorrichtung (7) zum Empfangsbereithalten und stromlos Schalten eine getaktete elektrische Energiequelle (13) aufweist.

8. Schaltungsanordnung nach Anspruch 7, **dadurch gekennzeichnet, dass** die Schaltungsanordnung (1) mittels einer Batterie (49) der getakteten elektrischen Energiequelle (13) für einen Zeitraum von vorzugsweise größer 30 Jahren energieautark und/oder mittels einer Solarzelle (53) der getakteten elektrischen Energiequelle (13) netzunabhängig periodisch empfangsbereit haltbar ist.

9. Schaltungsanordnung nach einem der Ansprüche 6 bis 8, **dadurch gekennzeichnet, dass** die Transpondervorrichtung (7) eine optische Empfangsvorrichtung (21) und dieser nachgeschaltet eine Verstärkerschaltung (23) aufweist.

10. Schaltungsanordnung nach einem der Ansprüche 6 bis 9, **dadurch gekennzeichnet, dass** zum Starten des Übertragens der Daten (5) und als Antwort auf eines der Wecksignale (11) mittels der Transpondervorrichtung (7) ein Startsignal (37) an die Lesevorrichtung (9) übermittelbar ist.

11. Schaltungsanordnung nach einem der Ansprüche 9 oder 10, **dadurch gekennzeichnet, dass** die Verstärkerschaltung (23) von einer elektrischen Energiequelle (27) getaktet mit der elektrischen Energie (13) versorgt wird und gemittelt eine Stromaufnahme von kleiner 250 nA, aufweist, insbesondere bei einer Versorgungsspannung zwischen 2,5 und 3,3 V.

12. Optisches Datenübertragungsset (3) zum Übertragen von Daten (5), **gekennzeichnet durch** eine Schaltungsanordnung (1) nach einem der Ansprüche 6 bis 11 und eine Lesevorrichtung (9), mittels der zum Starten des Übertrages der Daten (5) periodisch ein Wecksignal (11) an eine Transpondervorrichtung (7) der Schaltungsanordnung (1) sendbar ist und/oder eingerichtet, ausgelegt, konstruiert und/oder programmiert zum Durchführen eines Verfahrens nach einem der Ansprüche 1 bis 5.
